# EUROPÄISCHE PATENTSCHRIFT

(11) **EP 1 408 344 B1**
(45) Veröffentlichungstag und Bekanntmachung des Hinweises auf die Patenterteilung: **05.12.2012**
(21) Anmeldenummer: 03103711.2
(22) Anmeldetag: 07.10.2003
(51) Int. Cl.: G01S 17/89, G01S 17/10

(54) **Vermessungsvorrichtung und -Verfahren mit Laserscanner**
Survey apparatus and survey method using a laserscanner
Dispositif et méthode géodésique utilisant un laser à balayage

(30) Priorität: 07.10.2002 AT 6662002
(43) Veröffentlichungstag der Anmeldung: 14.04.2004
(73) Patentinhaber: Geodata Ziviltechnikergesellschaft m.b.h., 8700 Leoben (AT)
(72) Erfinder: Chmelina, Klaus, 1160, Wien (AT); Keszleri-Futivic, Markus, 8042, Graz (AT); Meyer, Christoph, 8010, Graz (AT); Pollak, Gerald, 8792, St. Peter-Freienstein (AT); Rabensteiner, Klaus, 8010, Graz (AT); Wagner, Josef, 8753, Fohnsdorf (AT)
(74) Vertreter: Müllner, Martin

(56) Entgegenhaltungen:
- EP-A- 1 176 393
- AT-B- 406 422
- DE-A- 10 103 861
- DE-A1- 10 033 873
- DE-U- 20 208 077
- US-A- 5 337 149
- LANGER D ET AL: "Imaging laser scanners for 3-D modeling and surveying applications" PROCEEDINGS OF THE 2000 IEEE, INTERNATIONAL CONFERENCE ON ROBOTICS & AUTOMATION, Bd. 1, 24. April 2000 (2000-04-24), Seiten 116-121, XP010500208 San Fransisco CA

## Beschreibung

Die Erfindung betrifft ein Verfahren zum Vermessen von Objekten, insbesondere zur geometrischen Erfassung von Hohlräumen, wie Tunnellaibungen, sowie zur Berechnung von Kubaturen, mit einem Laserscanner auf einer Halterung, wobei der Laserscanner zur Vermessung des Objekts mit einem Auswerterechenwerk verbunden ist. Sie betrifft weiters einen Laserscanner mit einem Auswerterechenwerk zur Durchführung des Verfahrens und ein Verfahren zur Herstellung eines solchen Laserscanners.

Im Tunnelbau ist eine genaue Vermessung des Streckenausbruchs bzw. die geometrische Erfassung des Hohlraumes besonders wichtig, um zu verschiedenen Zeitpunkten bzw. in verschiedenen Bauphasen eine Gegenüberstellung des geplanten Tunnelverlaufes zu dem tatsächlichen Verlauf zu erhalten. So sind auch rechtzeitige Richtungskorrekturen möglich.

Aus der AT 406 422 B ist ein Theodolit bekannt, an dem auf einer waagrechten Achse zwei Kameras befestigt sind. Zum Vermessen eines neuen Tunnelabschnittes mit dem Theodoliten werden mindestens zwei Zielreflektoren, deren Absolutkoordinaten bekannt sind, eingemessen. Mit Hilfe dieser Zielreflektoren werden die Absolutkoordinaten und die Orientierung des Theodoliten errechnet. Danach wird der Theodolit mit den beiden Kameras auf das zu vermessende Objekt gerichtet und mit den beiden Kameras je eine Aufnahme gemacht. Die beiden Fotos werden mit bekannten Methoden ausgewertet. Nach der Auswertung liegen die Absolutkoordinaten für die neu vermessenen Punkte vor. Diese Vermessungsmethode lässt sich auch mit Digitaltechnik automatisieren, wird dann aber sehr rechen- und zeitintensiv, da die fotografierten Bereiche meist keinen guten Kontrast aufweisen.

Aus US 5337149 ist bekannt, mit einem EDM (EDM=electronic distance measuring device) einen Raum Punkt für Punkt zu vermessen, indem man das EDM um zwei Achsen verdreht (Hochachse und Kippachse). Um mehrere Räume zusammenhängend zu vermessen, werden gemäß dieser Schrift zunächst aus dem ersten Raum drei Punkte des nächsten Raums vermessen. Dann bringt man das EDM in den nächsten Raum und vermisst diesen einschließlich dieser drei bekannten Punkte. Daraus kann man die Position des EDM im nächsten Raum berechnen.

Eine ähnliche Anordnung ist aus DE 10033873 bekannt. Dort ist ein Laser-Entfernungsmesser um zwei Achsen (Hochachse und Kippachse) verdrehbar angeordnet, sodass wiederum ein Raum Punkt um Punkt vermessen werden kann. Es werden dabei von einer Messposition aus die anderen Messpositionen direkt bestimmt, um eine zusammenhängende Vermessung von mehreren Messpositionen aus zu ermöglichen.

Aus der DE 101 03 861 A1 ist ein Laserscanner bekannt, der mit einem optoelektronischen Entfernungsmesser nach dem Impuls-Laufzeitverfahren arbeitet. Zur Vermessung von Objekten wird der Erfassungsbereich des Laserscanners auf das Objekt und mehrere bekannte Fixpunkte gerichtet und die Vermessung durchgeführt. Durch die vermessenen Fixpunkte kann die Position und die Orientierung des Laserscanners in Absolutkoordinaten ermittelt werden, sodass die Absolutkoordinaten des zu vermessenden Objektes berechnet werden können.

Solche Laserscanner haben einen Erfassungsbereich, der etwa kreisringförmig um die Längsachse des Laserscanners liegt, d.h. in Richtung der Längsachse kann nicht vermessen werden. Normalerweise stellt man den Laserscanner mit seiner Längsachse senkrecht auf, sodass man in alle etwa waagrechten Richtungen (bis etwa 50° Abweichung von der Waagrechten) messen kann, nicht jedoch nach oben und unten.

Nachteilig ist bei diesem Verfahren, dass nach oben und unten nicht vermessen werden kann, was aber im Tunnelbau sehr wichtig ist. Stellt man aber den Laserscanner mit seiner Längsachse etwa parallel zur Tunnelachse, um einen neu geschaffenen Tunnelabschnitt zu vermessen, dann liegen keine Fixpunkte im Erfassungsbereich des Laserscanners. Bei waagrechter Achse des Laserscanners kann zwar der Laserscanner die neu geschaffene Tunnellaibung in einem Zug vermessen, Fixpunkte sind aber nur relativ weit hinten vorhanden, nicht in dem unmittelbar neu geschaffenen Bereich, der vermessen werden soll. Daher können die Messwerte des Laserscanners nicht in Absolutkoordinaten umgerechnet werden. Dies ist der Grund dafür, dass Laserscanner bisher beim Tunnelbau nicht verwendet werden konnten.

Die Erfindung zielt deshalb darauf ab, ein Vermessungsverfahren zur Verfügung zu stellen, das sich von Lichtverhältnissen und ausreichendem Kontrast der Oberflächen der zu vermessenden Objekte loslöst und dennoch schnell durchzuführen ist und Messwerte in Absolutkoordinaten liefert, selbst dann, wenn keine Fixpunkte im Vermessungsbereich liegen.

Diese Aufgabe wird durch ein Verfahren der eingangs genannten Art erfindungsgemäß dadurch gelöst, dass die Halterung eine Präzisionsdrehvorrichtung mit zwei vorgegebenen Lagen aufweist, dass zunächst der Laserscanner in eine erste Lage der Präzisionsdrehvorrichtung gebracht wird, in der man mit dem Laserscanner das Objekt punktweise vermisst, dass man danach den Laserscanner um einen genau bekannten Winkel in die zweite Lage der Präzisionsdrehvorrichtung verdreht und seine Position zu mehreren Fixpunkten, deren Absolutkoordinaten bekannt sind, ermittelt und dass danach das Auswerterechenwerk die Absolutkoordinaten der vermessenen Punkte ermittelt.

Die Idee, die dieser Erfindung zugrunde liegt, besteht somit darin, dass man die Fixpunkte und das Objekt unabhängig voneinander vermisst. Da man aber genau weiß, um welchen Winkel man den Laserscanner zwischen den beiden Messungen verdreht hat, kann man dennoch die Absolutkoordinaten der Punkte des Objekts berechnen.

Es wird angemerkt, dass die Vermessung des Objekts einerseits und die Vermessung der Fixpunkte andererseits auch genauso gut in umgekehrter Reihenfolge durchgeführt werden können. Insbesondere zur Vermessung von Tunnels ist es zweckmäßig, wenn die Längsachse des Laserscanners in beiden Lagen etwa waagrecht ist und die Achse der Präzisionsdrehvorrichtung zum Verdrehen des Laserscanners etwa senkrecht ist. Wenn die Achse beim Vermessen der Tunnellaibung waagrecht und parallel zur Tunnelachse ist, wird der gesamte Tunnelabschnitt (Seitenwände, Boden, Zenit) in einem Zug vermessen. Die Drehung um eine senkrechte Achse ist technisch einfach zu realisieren, und nach einer Drehung um etwa 90° liegt der Laserscanner dann mit seiner Längsachse waagrecht, quer zur Tunnelachse, und hat daher die Vermessungsmarken, die weit hinter dem Standort liegen, in seinem Erfassungsbereich.

Es ist zweckmäßig, wenn man vor den Messungen die Achse der Präzisionsdrehvorrichtung zum Verdrehen des Laserscanners genau vertikal justiert. Einerseits kommt man dann mit nur zwei Fixpunkten aus, anderseits ist die Genauigkeit höher, als wenn man die genaue (nicht horizontale) Lage im Raum auf Grund der Vermessung der Fixpunkte errechnet.

Zur Durchführung des Verfahrens dient ein Laserscanner, der erfindungsgemäß auf einer Präzisionsdrehvorrichtung mit zwei vorgegebenen Lagen angeordnet ist.

Mit der Präzisionsdrehvorrichtung wird sichergestellt, dass der genau bekannte Winkel exakt eingestellt und den nachfolgenden Berechnungen zugrunde gelegt werden kann, ohne dass größere Toleranzen das Messergebnis verfälschen.

Es ist zweckmäßig, wenn die Präzisionsdrehvorrichtung eine Libelle zum Justieren der Drehachse in genau senkrechte Lage aufweist. Auf diese Weise kann die Drehachse exakt senkrecht justiert werden.

Wie bereits ausgeführt, ist es wichtig, dass der Drehwinkel der Vorrichtung genau bekannt ist. Um eine Vorrichtung mit genau bekanntem Drehwinkel herzustellen, kann man den Laserscanner in die beiden vorgegebenen Lagen der Präzisionsdrehvorrichtung bringen und Punkte vermessen, die in beiden Lagen vom Laserscanner erfasst werden, und aus den Messwerten dieser Punkte errechnet man den Drehwinkel genau und speichert ihn in dem Auswerterechenwerk ab. Da der Drehwinkel mit dem Laserscanner selbst bestimmt wird, gibt es keine systematischen Fehler, die bei einer unabhängigen Messung auftreten könnten.

Ein Anwendungsbeispiel des erfindungsgemäßen Vermessungsverfahrens ist in den beiliegenden Zeichnungen dargestellt.

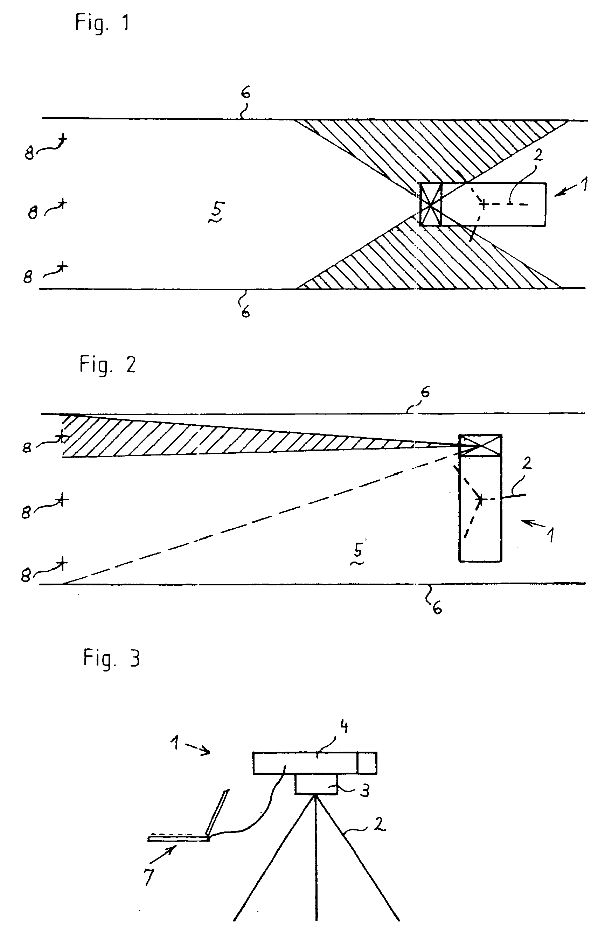

Fig. 1 zeigt eine Prinzipdarstellung des erfindungsgemäßen Vermessungsverfahrens während der Vermessung der Tunnellaibung in Draufsicht, Fig. 2 eine Prinzipdarstellung der Vermessung der lokalen Fixpunkte und Fig. 3 einen erfindungsgemäßen Laserscanner in der Seitenansicht. Fig. 3 zeigt einen erfindungsgemäßen Laserscanner, wobei auf einem Stativ 2 eine Präzisionsdrehvorrichtung 3 aufgesetzt ist, auf der wiederum der Scankopf 4 angeordnet ist. Die Präzisionsdrehvorrichtung 3 ermöglicht die Drehung des Scankopfes 4 um zwei zueinander orthogonale Achsen. Die Fixierung des Scankopfes 4 in unterschiedlichen Aufnahmepositionen erfolgt durch selbstzentrierende Arretierungen. Als Scankopf 4 kann beispielsweise ein handelsüblicher Laserscanner der Firma Riegl, Type LMS-Z 360 verwendet werden.

Eine Variante der Präzisionsdrehvorrichtung 3 ermöglicht die Drehung um nur eine etwa vertikale Achse und ist mit einem Schwenkgelenk ausgestattet, um den Scankopf 4 präzise horizontieren zu können. Ein mit dem Scankopf 4 in Verbindung stehendes Auswerterechenwerk 7 steuert den Scankopf 4 an und speichert die ermittelten Daten.

Fig. 1 zeigt eine schematische Darstellung einer Vermessungsanordnung in einem Tunnel 5 zur Vermessung bzw. Aufnahme der Tunnellaibung 6. Im Zuge eines Messvorganges wird die Tunnellaibung 6, in der Längsrichtung, über eine Länge von ca. 10 m erfasst und vermessen.

Der meist rohrförmige Laserscanner 1 ist dabei (mit seiner Z-Achse) parallel zur Tunnelachse ausgerichtet. Der positionierte Laserscanner 1 tastet die Tunnellaibung 6 in einer einstellbaren Auflösung in einem Raster- bzw. Messpunktabstand von ca. 3-10 cm, je nach gewünschter Genauigkeit, ab.

Die Punkte der Vermessung der Tunnellaibung 6 sind einem scannerspezifischen Koordinatensystem zugeordnet. Um die neu vermessenen Punkte der Tunnellaibung 6 mit bekannten absolut vermessenen Punkten, sogenannten Fixpunkten 8, in Verbindung bringen zu können, müssen der genaue absolute Standpunkt des Laserscanners 1 (d.h. der Ursprung des scannerspezifischen Koordinatensystems) und die Orientierung des Laserscanners ermittelt werden. Dazu wird der Laserscanner 1 nach der Aufnahme der Tunnellaibung 6, wie in Fig. 2 dargestellt, um eine vertikale Drehachse gedreht. In dieser Stellung erfolgt durch Steuersoftware des Auswerterechenwerkes 7 eine gezielte Abtastung mit niedriger Auflösung (Grobscan) des Bereiches, in dem sich die Fixpunkte 8 befinden. Die Position der Fixpunkte 8 wird durch Zielmarken bzw. sogenannten Retro-Reflektoren hervorgehoben, sodass die Software an Hand spezifischer Merkmale des Reflektors, wie Größe, Form und Reflexionseigenschaften, die Reflektoren automatisch erkennt. Nach dem Grobscan werden die Bereiche, in denen die Software die Zielmarken der Fixpunkte 8 ermittelt hat, mit höchstmöglicher Genauigkeit mit einem sogenannten Feinscan genau vermessen.

Die aufgenommenen Punkte der Tunnellaibung 6 müssen für alle nachfolgenden Berechnungs- und Auswerteschritte in ein übergeordnetes Koordinatensystem, in ein sogenanntes Projektsystem, übergeführt werden. Dies wird durch eine räumliche 3D-Koordinatentransformation bewerkstelligt. Als Grundlage einer solchen 3D-Koordinatentransformation müssen 3D-Koordinaten von mindestens 3 identen Punkten in dem Absoluten-Koordinatensystem und in dem Scannerkoordinatensystem bekannt sein.

Mit Hilfe der derart im lokalen Scannerkoordinatensystem bestimmten Fixpunkten 8 wird nun eine Zuordnung homologer Punkte durchgeführt, d.h. es werden den lokalen Fixpunkten 8 die korrespondierenden Punktnummern der im Projektsystem mit konventionellen Methoden bestimmten Punkte zugewiesen. Dies ermöglicht als nächsten Schritt die Berechnung der Parameter der 3D-Transformation und somit über statistische Verfahren unmittelbar vor Ort die Qualitätsbeurteilung der Transformation der Scannerkoordinaten in das Projektsystem und somit die Genauigkeit der gesamten Aufnahme.

Der Zusammenhang zwischen der um 90° gedrehten Aufnahme der Fixpunkte 8 gemäß Fig. 2 wird durch eine Kalibriermessung hergestellt, d.h. es werden in beiden Positionen idente Punkte gescannt und daraus Transformationsparameter als Gerätekenngrößen der Gerätehalterung abgeleitet. Beim eigentlichen Messvorgang werden diese Transformationsparameter angewandt, um die lokalen Koordinaten der Tunnellaibung 6 in absolute Koordinaten zu transformieren. Die physikalische Realisierung erfolgt hierbei durch die oben beschriebene Drehvorrichtung.

Der Messvorgang unterscheidet sich von konventionellen Laserscanner-Aufnahmen dadurch, dass die Einmessung eines Objektes in zwei Positionen erfolgt und die Überführung der lokalen Scannerkoordinaten in globale Projektkoordinaten durch eine 2-stufige räumliche Koordinatentransformation erfolgt. Hierbei wird die erste Transformation Laibungsscannen auf Fixpunktescannen im Zuge der Aufnahme durch eine präzise Präzisionsdrehvorrichtung 3 realisiert. Die Parameter dieser Transformation sind Gegenstand einer geeigneten Kalibrierung, wobei ein Satz von Transformationsparametern jeweils zwei korrespondierenden und sehr genau reproduzierbaren Positionen der Präzisionsdrehvorrichtung 3 zugeordnet wird.

Eine weitere Besonderheit des Verfahrens besteht in der automatischen Zuordnung homologer Punkte aus praktisch beliebig großen Punkthaufen in vernachlässigbarer Zeit während der Aufnahme. Dies wird durch den Vergleich von Tetraedern unter Anwendung von Filter-, Such-, und Sortierverfahren erreicht.

Zusätzlich besteht die Möglichkeit, den Scankopf 4 mittels der oben beschriebenen Präzisionsdrehvorrichtung 3 zu horizontieren, d.h. zwei Achsen des scannerinternen Koordinatensystems orthogonal zu lokalen Lotrichtung zu stellen. In diesem Fall vereinfacht sich die zur Überführung der lokalen Koordinaten benötigte Transformation durch den Wegfall zweier Drehwinkel. In der Folge ist eine signifikante Genauigkeitssteigerung der Ergebnisse zu erwarten. Die Bestimmung der beiden Drehwinkel mittels einer geeigneten Libelle gelingt wesentlich genauer als durch die Berechnung aus einer räumlichen Koordinatentransformation.

Der Zeitaufwand für die Vermessung von ca. 10 m Tunnellaibung 6 wird bei dem hier beschriebenen Vermessungsverfahren auf eine Zeit von ca. 3 min verkürzt.

## Patentansprüche

1. Verfahren zum Vermessen von Objekten, insbesondere zur geometrischen Erfassung von Hohlräumen, wie Tunnellaibungen (6), sowie zur Berechnung von Kubaturen, mit einem Laserscanner (1) auf einer Halterung, wobei der Laserscanner (1) zur Vermessung des Objekts mit einem Auswerterechenwerk (7) verbunden ist, **dadurch gekennzeichnet, dass** die Halterung eine Präzisionsdrehvorrichtung (3) mit zwei vorgegebenen Lagen aufweist, dass zunächst der Laserscanner (1) in eine erste Lage der Präzisionsdrehvorrichtung (3) gebracht wird, in der man mit dem Laserscanner (1) das Objekt punktweise vermisst, dass man danach den Laserscanner (1) um einen genau bekannten Winkel in die zweite Lage der Präzisionsdrehvorrichtung (3) verdreht und seine Position zu mehreren Fixpunkten (8), deren Absolutkoordinaten bekannt sind, ermittelt und dass danach das Auswerterechenwerk (7) die Absolutkoordinaten der vermessenen Punkte ermittelt.

2. Verfahren zum Vermessen von Objekten, insbesondere zur geometrischen Erfassung von Hohlräumen, wie Tunnellaibungen (6), sowie zur Berechnung von Kubaturen, mit einem Laserscanner (1) auf einer Halterung, wobei der Laserscanner (1) zur Vermessung des Objekts mit einem Auswerterechenwerk (7) verbunden ist, **dadurch gekennzeichnet, dass** die Halterung eine Präzisionsdrehvorrichtung (3) mit zwei vorgegebenen Lagen aufweist, dass zunächst der Laserscanner (1) in eine erste Lage der Präzisionsdrehvorrichtung (3) gebracht wird, in der man seine Position zu mehreren Fixpunkten (8), deren Absolutkoordinaten bekannt sind, ermittelt, dass man danach den Laserscanner (1) um einen genau bekannten Winkel in die zweite Lage der Präzisionsdrehvorrichtung (3) verdreht und das Objekt punktweise vermisst und dass danach das Auswerterechenwerk (7) die Absolutkoordinaten der vermessenen Punkte ermittelt.

3. Verfahren nach Anspruch 1 oder 2, **dadurch gekennzeichnet, dass** die Längsachse des Laserscanners (1) in beiden Lagen etwa waagrecht ist und die Achse der Präzisionsdrehvorrichtung (3) zum Verdrehen des Laserscanners (1) etwa senkrecht ist.

4. Verfahren nach Anspruch 3, **dadurch gekennzeichnet, dass** man vor den Messungen die Achse der Präzisionsdrehvorrichtung (3) zum Verdrehen des Laserscanners genau vertikal justiert.

5. Laserscanner (1) mit einem Auswerterechenwerk (7) zur Durchführung des Verfahrens nach einem der Ansprüche 1-4, **dadurch gekennzeichnet, dass** der Laserscanner (1) auf einer Präzisionsdrehvorrichtung (3) mit zwei vorgegebenen Lagen angeordnet ist.

6. Laserscanner (1) nach Anspruch 5, **dadurch gekennzeichnet, dass** die Präzisionsdrehvorrichtung (3) eine Libelle zum Justieren der Drehachse in genau senkrechte Lage aufweist.

7. Verfahren zur Herstellung eines Laserscanners (1) nach Anspruch 5 oder 6, **dadurch gekennzeichnet, dass** man den Laserscanner (1) in die beiden vorgegebenen Lagen der Präzisionsdrehvorrichtung (3) bringt und Punkte vermisst, die in beiden Lagen vom Laserscanner (1) erfasst werden, und dass man aus den Messwerten dieser Punkte den Drehwinkel genau errechnet und in dem Auswerterechenwerk (7) abspeichert.

## Claims

1. Method for surveying objects, in particular for measuring hollow spaces, such as tunnel soffits (6), geometrically, and also for calculating cubatures, with a laser scanner (1) on a holding support, wherein the laser scanner (1) for surveying the object is connected to an evaluation arithmetic unit (7), **characterised in that** the holding support has a precision turning device (3) with two preset positions, **in that** in the first instance the laser scanner (1) is brought into a first position of the precision turning device (3) in which the object is surveyed pointwise with the laser scanner (1), **in that** then the laser scanner (1) is turned about an angle that is known exactly into the second position of the precision turning device (3), and the scanner's position is ascertained with respect to a plurality of fixed points (8), whose absolute coordinates are known, and **in that** then the evaluation arithmetic unit (7) ascertains the absolute coordinates of the points that have been surveyed.

2. Method for surveying objects, in particular for measuring hollow spaces, such as tunnel soffits (6), geometrically, and also for calculating cubatures, with a laser scanner (1) on a holding support, wherein the laser scanner (1) for surveying the object is connected to an evaluation arithmetic unit (7), **characterised in that** the holding support has a precision turning device (3) with two preset positions, **in that** in the first instance the laser scanner (1) is brought into a first position of the precision turning device (3) in which the scanner's position is ascertained with respect to a plurality of fixed points (8), whose absolute coordinates are known, **in that** then the laser scanner (1) is turned about an angle that is known exactly into the second position of the precision turning device (3) and the object is surveyed pointwise, and **in that** then the evaluation arithmetic unit (7) ascertains the absolute coordinates of the points that have been surveyed.

3. Method according to claim 1 or 2, **characterised in that** the longitudinal axis of the laser scanner (1) is substantially horizontal in both positions, and the axis of the precision turning device (3) for turning the laser scanner (1) is substantially perpendicular.

4. Method according to claim 3, **characterised in that** prior to the measurements the axis of the precision turning device (3) for turning the laser scanner (1) is adjusted vertically in an exact manner.

5. A laser scanner (1) having an evaluation arithmetic unit (7) for carrying out the method according to one of claims 1-4, **characterised in that** the laser scanner (1) is arranged on a precision turning device (3) with two preset positions.

6. A laser scanner (1) according to claim 5, **characterised in that** the precision turning device (3) has a spirit level for adjusting the rotary axis into a position which is exactly vertical.

7. Method for producing a laser scanner (1) according to claim 5 or 6, **characterised in that** the laser scanner (1) is brought into the two preset positions of the precision turning device (3) and points are surveyed that are measured in both positions by the laser scanner (1), and **in that** the rotation angle is calculated exactly from the measured values of these points and stored in the evaluation arithmetic unit (7).

## Revendications

1. Procédé de mesure d'objets, destiné notamment à identifier la géométrie de cavités telles que les intrados de tunnels (6) ainsi qu'au calcul de volumes intérieurs, comportant un dispositif de numérisation au laser (1) sur un support, le dispositif de numérisation au laser (1) étant relié à un ordinateur d'analyse (7) pour réaliser la mesure de l'objet, **caractérisé en ce que** ledit support présente un dispositif rotatif de précision (3) ayant deux situations prédéfinies, que l'on amène le dispositif de numérisation au laser (1) d'abord dans une première situation du dispositif rotatif de précision (3) dans laquelle on réalise la mesure de l'objet en procédant par points, que l'on tourne le dispositif de numérisation au laser (1) ensuite selon un angle précisément connu pourqu'il atteigne la seconde situation du dispositif rotatif de précision (3) et détermine sa position par rapport à plusieurs points fixes (8) dont les coordonnées absolues sont connues et que le ordinateur d'analyse (7) détermine ensuite les coordonnées absolues des points ayant servi à réaliser la mesure.

2. Procédé de mesure d'objets, destiné notamment à identifier la géométrie de cavités telles que les intrados de tunnels (6) ainsi qu'au calcul de volumes intérieurs, comportant un dispositif de numérisation au laser (1) sur un support, le dispositif de numérisation au laser (1) étant relié à un ordinateur d'analyse (7) pour réaliser la mesure de l'objet, **caractérisé en ce que** ledit support présente un dispositif rotatif de précision (3) ayant deux situations prédéfinies, que l'on amène le dispositif de numérisation au laser (1) d'abord dans une première situation du dispositif rotatif de précision (3) dans laquelle on détermine sa position par rapport à plusieurs points fixes (8) dont les coordonnées absolues sont connues et que l'on tourne le dispositif de numérisation (1) ensuite selon un angle précisément connu pourqu'il atteigne la seconde situation du dispositif rotatif de précision (3) et réalise la mesure de l'objet en procédant par points et que le ordinateur d'analyse (7) détermine ensuite les coordonnées absolues des points ayant servi à réaliser la mesure.

3. Procédé selon les revendications 1 ou 2, **caractérisé en ce que** l'axe longitudinal du dispositif de numérisation au laser (1) est approximativement horizontal dans les deux situations et l'axe du dispositif rotatif de précision (3) destiné à tourner le dispositif de numérisation au laser (1) est approximativement vertical.

4. Procédé selon la revendication 3, **caractérisé en ce que**, préalablement aux mesures, on ajuste l'axe du dispositif rotatif de précision (3) destiné à tourner le dispositif de numérisation au laser de façon à qu'il soit exactement vertical.

5. Dispositif de numérisation au laser (1) comportant un ordinateur d'analyse (7) destiné à mettre en oeuvre le procédé selon l'une des revendications 1 à 4, **caractérisé en ce que** le dispositif de numérisation au laser (1) est disposé sur un dispositif rotatif de précision (3) ayant deux situations prédéfinies.

6. Dispositif de numérisation au laser (1) selon la revendication 5, **caractérisé en ce que** le dispositif rotatif de précision (3) présente un niveau à bulle destiné à ajuster l'axe de rotation de façon à ce qu'il atteigne une situation exactement verticale.

7. Procédé de mise à disposition d'un dispositif de numérisation au laser (1) selon les revendications 5 ou 6, **caractérisé en ce que** l'on amène le dispositif de numérisation au laser (1) dans les deux situations prédéfinies du dispositif rotatif de précision (3) et réalise la mesure de points en les soumettant, dans lesdites deux situation, à une acquisition au moyen du dispositif de numérisation au laser (1) et que l'on calcule, à partir des valeurs de mesure desdits points, précisément l'angle de rotation puis l'enregistre dans l'ordinateur d'analyse (7).
